# FASCICULE DE BREVET EUROPEEN

(11) **EP 1 931 604 B1**
(45) Date de publication et mention de la délivrance du brevet: **01.04.2009**
(21) Numéro de dépôt: 06831239.6
(22) Date de dépôt: 27.09.2006
(51) Int. Cl.: C04B 28/08, C04B 22/06, C04B 22/14

(54) **LIANT HYDRAULIQUE COMPORTANT UN SYSTEME TERNAIRE D'ACCELERATION, MORTIERS ET BETONS COMPORTANT UN TEL LIANT**
HYDRAULISCHES BINDEMITTEL MIT EINEM TERNÄREN BESCHLEUNIGUNGSSYSTEM UND MÖRTEL UND BETONE MIT EINEM DERARTIGEN BINDEMITTEL
HYDRAULIC BINDER COMPRISING A TERNARY ACCELERATION SYSTEM AND MORTARS AND CONCRETES COMPRISING ONE SUCH BINDER

(30) Priorité: 28.09.2005 FR 0552940
(43) Date de publication de la demande: 18.06.2008
(73) Titulaire: LAFARGE, 75116 Paris (FR)
(72) Inventeur: TESTUD, Michel, F-69740 Genas (FR)
(74) Mandataire: Berruet, Laure
(86) Numéro de dépôt international: PCT/FR2006/050952
(87) Numéro de publication internationale: WO 2007/039694

(56) Documents cités:
- WO-A-91/19687
- US-B1- 6 409 819
- US-B1- 6 793 851

## Description

La présente invention concerne de manière générale des liants hydrauliques à base de laitier de haut fourneau et de clinker ou de ciment Portland (ciment au laitier) qui présentent des résistances mécaniques (compression) à 2 jours d'au moins 8 Mpa et de préférence répondant aux classes 32,5R, 42,5N, ou 42,5 R selon la norme EN 197-1, ainsi que des mortiers et bétons obtenus à partir de tels liants hydrauliques.

Plus particulièrement l'invention concerne des liants hydrauliques à base de ciment au laitier contenant 20 à 80 % en poids de laitier de haut fourneau, correspondant aux ciments des classes CEM III A (contenant 36 à 65 % en poids de laitier de haut fourneau) et CEM III B (contenant 66 à 80 % en poids de laitier de haut fourneau) de la norme EN 197-1, et comportant un additif d'accélération qui est un système ternaire constitué d'au moins un hydroxyde de métal alcalin, d'au moins un sulfate de métal alcalin et d'au moins une source de sulfate de calcium.

Les liants hydrauliques selon l'invention peuvent être fabriqués en cimenterie ou reconstitués au niveau d'une centrale à béton, par mélange in situ de clinker ou de ciment Portland, et de laitier de haut fourneau et des constituants nécessaires au système ternaire d'accélération.

Les liants hydrauliques selon l'invention permettent de réaliser des mortiers et bétons à des températures allant de 5°C à 30°C et plus particulièrement de 5°C à 20°C et qui présentent des résistances mécaniques précoces entre 10h et 48h au moins comparable à celles obtenues avec des accélérateurs classiques.

Le développement de l'utilisation de laitier de haut fourneau en substitution au clinker ou au ciment Portland (ciment au laitier) pour réduire notamment le CO₂ émis dans l'atmosphère par tonne de liant, représente un grand enjeu économique pour le futur. Mais l'utilisation de ciment au laitier, conduit généralement à l'obtention de résistances mécaniques précoces faibles, d'autant plus que la teneur en laitier de haut fourneau est élevée et la température est basse, et pose des problèmes de régularité de performances.

Par contre, les résistances mécaniques obtenues à 28 jours sont généralement suffisantes. Pour pallier ces résistances mécaniques précoces insuffisantes, on utilise couramment des additifs accélérateurs, notamment des sels de calcium ou des sels alcalins, sodium ou potassium, tels que les chlorures, nitrates, nitrites, formiates, thiocyanates.

Ces additifs accélérateurs sont utilisés :
- soit au niveau de la centrale à béton (application béton), comme adjuvants, ou il est possible d'utiliser directement un ciment type CEM III A ou B , ou de réaliser in situ le mélange ciment Portland + laitier, au niveau du malaxeur.
- soit au niveau de la cimenterie (application cimenterie), ou ils sont mélangés au clinker + laitier lors de la production du ciment au laitier.

Les additifs d'accélération utilisés jusqu'à aujourd'hui ont des performances irrégulières avec les ciments au laitier, qui varient notamment en fonction du type de ciment, du lot de ciment et de la température d'application. Dans certains cas, leur impact se traduit même par une perte des résistances mécaniques aux échéances précoces contrairement à ce que l'on recherche.

En particulier, les chlorures de calcium et de sodium sont considérés comme les accélérateurs les plus performants pour les ciments au laitier, mais ils ont un effet très préjudiciable quant à la corrosion des armatures. Le document US 6,793,851 décrit un liant hydraulique comprenant un additif d'accélération à base chaux et sulfate de calcium.

Le but de l'invention est de pallier ces inconvénients tout en obtenant à court terme une résistance mécanique suffisante, en particulier pour réaliser des mortiers et bétons ayant les résistances à 2 jours répondant aux classes 32,5R, 42,5 N, ou 42,5R selon la norme EN 197-1, ou comparables à celles obtenues avec les chlorures.

Les buts ci-dessus sont atteints selon l'invention par un liant hydraulique à base de ciment au laitier comprenant 20 à 80 % en poids par rapport au poids total de ciment au laitier, d'un laitier ou d'un mélange de laitiers de haut fourneau, le complément étant du clinker ou un ciment Portland,
caractérisé en ce qu'il comprend au moins un additif d'accélération qui est un système ternaire constitué :
- d'au moins un hydroxyde de métal alcalin en une quantité telle que, lors du gâchage dans l'eau du liant hydraulique, la concentration molaire en hydroxyde de métal alcalin dans l'eau est de 0,05 N à 0,60N, de préférence de 0,20N à 0,40N ;
- d'au moins un sulfate de métal alcalin présent à raison de 0,2 à 3 % en poids du ciment au laitier; et
- d'au moins une source de sulfate de calcium en proportion telle que la teneur en sulfate de calcium (CaSO₄), par rapport au poids de ciment au laitier, est de 2 à 7 %.

La présente invention concerne également un procédé pour réaliser un liant hydraulique à base de ciment au laitier, comprenant 20 à 80 % en poids par rapport au poids total de ciment au laitier d'un laitier ou d'un mélange de laitiers de haut fourneau et le complément étant du clinker ou du ciment Portland, et ayant une résistance mécanique à 2 jours d'au moins 8 MPa et de préférence répondant aux classes 32,5R, 42,5N, ou 42,5 R selon la norme EN 197-1, ainsi que des mortiers et bétons obtenus à partir de tels liants hydrauliques qui consiste à ajouter au ciment au laitier ou former au sein du ciment au laitier un additif d'accélération tel que défini ci-dessus.

L'invention a encore trait à des mortiers et bétons comprenant des granulats et un liant hydraulique tel que défini ci-dessus, notamment à de tels mortiers et bétons qui présentent de préférence des résistantes mécaniques à 2 jours répondant aux classes 32,5R, 42,5N, ou 42,5R de la norme EN 197.1

### 1. Le système ternaire d'accélération

L'hydroxyde de métal alcalin du système ternaire d'accélération selon l'invention peut être l'hydroxyde de lithium, l'hydroxyde de potassium, l'hydroxyde de sodium ou un mélange de deux ou plus de ces hydroxydes de métal aicaiin.

La teneur en hydroxyde de métal alcalin dans le système ternaire et par conséquent dans le liant hydraulique est telle que, dans l'eau de gâchage, la concentration molaire en hydroxyde alcalin est de 0,05N à 0,60N, de préférence de 0,20N à 0,40N.

Lorsque les résistances mécaniques sont déterminées selon la norme EN 196-1, l'eau de gâchage représente 50% en poids par rapport au poids de liant hydraulique; typiquement, dans le cas des bétons l'eau de gâchage peut représenter de 20% à 100% en poids par rapport au poids de liant hydraulique.

Le sulfate de métal alcalin peut être du sulfate de lithium, du sulfate de potassium, du sulfate de sodium ou un mélange de deux ou plus de ces sulfates de métal alcalin.

Le dosage du sulfate de métal alcalin contenu dans le système ternaire d'accélération, et par conséquent dans le liant hydraulique, est de 0,2 à 3 % par rapport au poids total du ciment au laitier.

La source de sulfate de calcium peut être du gypse, un semi-hydrate, de l'anhydrite ou un mélange de deux ou plusieurs de ces sources. Le sulfate de calcium de gypsage du clinker peut être utilisé comme source partielle ou totale de sulfate de calcium. De préférence, le sulfate de calcium de gypsage du clinker constitue une source partielle et est associé à de l'anhydrite.

La teneur en source de sulfate ou mélange de sources de sulfate du système ternaire d'accélération et par conséquent du liant hydraulique est telle que la quantité de sulfate de calcium (CaSO₄) présent dans le liant représente 2 à 7 % du poids du ciment au laitier.

La norme européenne des ciments EN 197-1 spécifie un ajout maximum d'additifs de 1% en poids, ces additifs n'étant ni les constituants secondaires, ni le sulfate de calcium, pour les ciments des classes CEM III A et B, la norme limite aussi la teneur en SO₃ à 4,5 % en poids maximum.

Lorsque le ciment au laitier est additivé directement en usine, lors de sa production, les teneurs en constituants du système ternaire d'accélération selon l'invention seront limités, en tenant compte que :
- le sulfate alcalin déjà présent dans le clinker ne doit pas être pris en compte dans le calcul ; seul le sulfate alcalin d'ajout est à considérer.
- le sulfate de calcium n'est pas compté en additif, mals il sera pris en compte pour la teneur en SO₃ total.

Il est possible d'ajouter au ciment, lors du gypsage du clinker, une partie ou la totalité du sulfate de calcium du système d'accélération, dans la limite de la teneur maximale admissible en SO₃. Le choix de la nature de la source de sulfate de calcium utilisée peut être envisagé en prévision d'une optimisation du système ternaire.

Lorsque le système ternaire est utilisé au niveau d'une centrale à béton, comme un adjuvant, ces limitations ne s'appliquent pas et les dosages peuvent être augmentés.

Dans ce cas, l'optimisation du dosage des constituants du système ternaire tient compte des teneurs en sulfate de calcium et sulfates alcalins déjà introduites dans le béton par le ciment au laitier.

Dans le cas d'une application béton, le sulfate de calcium est ajusté en complément au sulfate de calcium de gypsage du ciment déjà présent. Il est possible que le sulfate de calcium déjà présent dans certains ciments soit suffisant.

Ce système ternaire d'accélération peut être associé à tout autre accélérateur traditionnel tel que les sels de calcium ou les sels alcalins ou bien à des additifs de nucléation (germes) qui constituent des sites de germination préférentiels des silicates de calcium et des sulfoaluminates au cours de l'hydratation du ciment au laitier. Ces agents de nucléation peuvent être des silicates de calcium amorphes ou cristallisés, appelés CSH, des carbonates alcalino-terreux tels que CaCO₃, des silicates alcalino-terreux et leurs oxydes ou hydroxydes.

L'utilisation du système ternaire d'accélération à la place des chlorures améliore par ailleurs la tenue à la corrosion des armatures.

### 2. Optimisation du système ternaire d'accélération

Deux voies sont possibles pour optimiser les dosages des composants du système ternaire d'accélération :
- soit elle se fait en réalisant un plan d'expérience du second degré, à trois facteurs qui sont les constituants du système ternaire. L'optimisation est alors réalisée au moyen d'un plan de mélange avec contrainte. Les contraintes pouvant être, par exemple, un taux maximum de sulfate alcalin et de sulfate de potassium pour respecter les maximums spécifiés par la norme EN 197-1.
- soit elle se fait selon un procédé en deux étapes :
   - la première a pour objectif de déterminer le dosage optimum en hydroxyde alcalin en réalisant différentes combinaisons binaires avec, par exemple, le sulfate alcalin, de préférence lorsque le ciment est déjà gypsé avec du sulfate de calcium.
   - la deuxième consiste, en utilisant le dosage optimum de l'hydroxyde alcalin précédemment déterminé, de réaliser des combinaisons ternaires ou on fera varier les ratios et dosages entre le sulfate alcalin et le sulfate de calcium. On déterminera ainsi les dosages optimum des constituants du système ternaire d'accélérateurs.
   La même procédure peut être suivie en utilisant lors de la première étape, le sulfate de calcium au lieu du sulfate alcalin, de préférence lorsque le ciment n'est pas sulfaté.

Avec les différents dosages testés des constituants, on mesure les résistances en compression à 2 jours lorsque les essais sont réalisés sur mortiers selon EN 196-1, et que l'on souhaite situer les performances par rapport aux minimum requis pour les classes 32,5R, 42,5N, ou 42,5R. L'optimisation peut également se faire sur une autre composition de mortier ou sur béton, à une échéance précoce considérée comme critique, et définie, par exemple, entre 10 et 48 heures.

### 3. Les laitiers de haut fourneau

Toutes les qualités de laitier de haut fourneau sont utilisables pour composer un ciment au laitier.

Typiquement, ces laitiers de haut fourneau sont constitués d'au moins 80% en poids par rapport au poids total du laitier d'une phase vitreuse.

Les constituants chimiques principaux de ces laitiers ainsi que leurs proportions en pourcent en poids par rapport au poids total du laitier sont indiqués ci-après :

| | |
|---|---|
| SiO₂ | 28 à 40 % |
| CaO | 31 à 47 % |
| Al₂O₃ | 9 à 17 % |
| MgO | 0 à 16% |
| TiO₂ | 0 à 12 % |

Les teneurs des différents constituants peuvent être ajustées en mélangeant plusieurs laitiers de haut fourneau.

Les laitiers de haut fourneau peuvent être plus ou moins réactifs. Cette réactivité est caractérisée par l'indice d'hydraulicité HI (Hydraulic Index) défini par la formule :

HI = (CaO + MgO + Al₂O₃)/(SiO₂)

qui permet un classement selon le degré de réactivité.

L'Indice d'hydraulicité a été présenté, au même titre que plusieurs autres indices de réactivité des laitiers dans les publications de H. G. Smolczyk au Congrès International de la Chimie des ciments à Paris 1980, Vol 1. Thème 3.

Typiquement, les laitiers de haut fourneau ont un Indice d'hydraulicité HI de 1,22 à 2.

Comme indiqué, le liant hydraulique selon l'invention permet, en mélange avec des granulats appropriés, d'obtenir des mortiers et bétons, en particulier à des températures de 5°C à 30°C, de préférence de 5°C à 20°C, qui présentent des résistances à la compression à 2 jours d'au moins 8 MPa et répondent aux classes 32,5R, 42,5N, ou 42,5R de la norme EN 197-1 lorsqu'il s'agit d'essais réalisés à 20°C selon EN196-1.

Pour réaliser les mortiers et bétons selon l'invention on peut utiliser tout type de granulat classiquement utilisé pour la fabrication des mortiers et bétons.

A titre d'exemple, on peut citer les granulats de roches (roches éruptives, métamorphiques ou sédimentaires) et les granulats artificiels légers.

Typiquement, les bétons réalisés selon l'invention seront conformes aux exigences de la nome béton européenne EN 206-1.

Les mortiers sont des compositions cimentaires dans lesquelles le diamètre du plus gros granulat est au maximum de 5mm. Pour ces compositions, le rapport poids/poids, liant hydraulique / granulat, est généralement compris entre 1/4 et 1/2.

Les mortiers et bétons selon l'invention peuvent comporter en outre tout adjuvant classique tel que des plastifiants-réducteurs d'eau, des superplastifiants, des entraîneurs d'air, des hydrofuges de masse, tels que définis par la norme NF - EN 934-2

Les exemples suivants illustrent la présente invention. Dans les exemples, sauf indication contraire, tous les pourcentages et parties sont exprimés en poids.

### Exemple I

Les essais de l'exemple I ont été réalisés en mortier normalisé à 20°C selon EN 196 - 1.

Le dosage en eau est défini par le ratio eau/ ciment au laitier = 0,50.

Le ciment A utilisé pour ces essais est composé en mélangeant :
- 70 % poids d'un laitier de réactivité moyenne, ayant un indice d'hydraulicité HI de 1,51.
- 30 % poids d'un clinker Portland contenant 70% d'alite (C3S), 12,4% de bélite (C2S), 9,8% d'aluminate (C3A) et 1.1% de ferrites (C4AF). Il contient 1,4 % de gypse et 1,2% de semi-hydrate et 0,6% de sulfate alcalin.
- Dans l'essai ( I-1 ), le dosage des composants du système ternaire d'accélération a été limité en sulfate de potassium pour ne pas dépasser le 1%, maximum d'additifs, permit au niveau du ciment au laitier par la norme EN 197-1, hors ajout du sulfate de calcium.
- Dans l'essai (I-2), le système ternaire d'accélérateurs est mis en oeuvre comme un adjuvant en centrale à béton. Ceci permet d'optimiser le dosage du sulfate de potassium, sans être limité, quant à sa teneur, par la norme ciment.
- On peut envisager des exemples à l'optimum de sulfatage répondant aux normes ciments, notamment avec des ciments plus riches en sulfate alcalin.

Dans tous les exemples, les dosages sont donnés en % poids par rapport au ciment au laitier. La teneur en hydroxyde de lithium équivaut à une concentration molaire de 0,435N dans l'eau de gâchage.

| Essai N° | Hydroxyde de lithium | Sulfate de potassium | Anhydrite | Résistance à 2 jours |
|---|---|---|---|---|
| témoin | - | - | - | 6,1 MPa |
| I-1 | 0,37% | 0,63% | 2,80% | 12,2MPa |
| I-2 | 0,37% | 1,62% | 2,80% | 14,2MPa |

Le système ternaire d'accélération apporte dans les deux cas un gain significatif de résistance (compression) à 2 jours par rapport au témoin.

Les résistances en compression obtenues satisfont aux exigences de la norme EN 197-1 pour les classes 32,5 R et 42,5N.

On réalise les mêmes essais (I-3) avec un ciment B composé en mélangeant :
- 50% en poids d'un laitier ayant un HI de 1,89
- 50 % en poids de clinker Portland de la composition du ciment A.

Les résultats obtenus sont les suivants :

| Essai N° | Hydroxyde de lithium | Sulfate de potassium | Anhydrite | Résistance à 2 jours |
|---|---|---|---|---|
| 1-3 | 0,37% | 0,63% | 2,80% | 22,0 MPa |

Le système ternaire d'accélération permet de satisfaire à la résistance mécanique (compression) à 2 jours de la classe 42,5R.

### Exemple II

L'exemple II a pour but de comparer les performances obtenues avec le système ternaire d'accélération et le chlorure de calcium ; les quantités des composants du système ternaire d'accélération utilisées sont en conformité avec la teneur maximale en additif permise par la norme EN 197-1. Les essais ont été réalisés avec le même ciment A et dans les mêmes conditions que dans l'exemple I.

Dans tous les essais, les dosages sont donnés en % poids par rapport au ciment au laitier. La teneur en hydroxyde de lithium équivaut à une concentration molaire de 0,435N dans l'eau de gâchage.

| Essai N° | Hydroxyde de lithium | Sulfate de potassium | Anhydrite | Chlorure de calcium | Résistance à 2 jours |
|---|---|---|---|---|---|
| témoin | - | - | - | - | 6,1MPa |
| II-1 | 0,37% | 0,63% | 2,80% | - | 12,2MPa |
| II-2 Comparatif | - | - | - | 1 | 10,8MPa |

Les résultats obtenus mettent en évidence que la résistance mécanique (compression) obtenue à 2 jours avec le système ternaire d'accélération est légèrement supérieure à celle obtenue avec du chlorure de calcium ; elle satisfait au minima requis par la norme EN 197-1 pour les classes 32,5 R et 42,5N.

### Exemple III

Les essais de l'exemple III sont réalisés également en mortier normalisé selon EN 196 -1 ; les ciments au laitier sont composés avec 30% en poids d'un clinker Portland et 70% en poids de laitiers L1, L2, L3 de différentes réactivités.

Le clinker Portland utilisé est identique au clinker Portland dans l'exemple I, mais il a un gypsage différent. Il contient 1,4 % de gypse, 1,2% de semi-hydrate et 1,0 % d'anhydrite. Ces essais montrent que le système ternaire accélère les mélanges de ciment Portland et de laitier quelle que soit la réactivité du laitier.

Composition du système ternaire mis en oeuvre :

| | |
|---|---|
| Hydroxyde de lithium | : 0,37% |
| | (en poids par rapport au ciment au laitier). |
| Sulfate de potassium | : 0,95 % |
| Anhydrite | : 1,65 % |

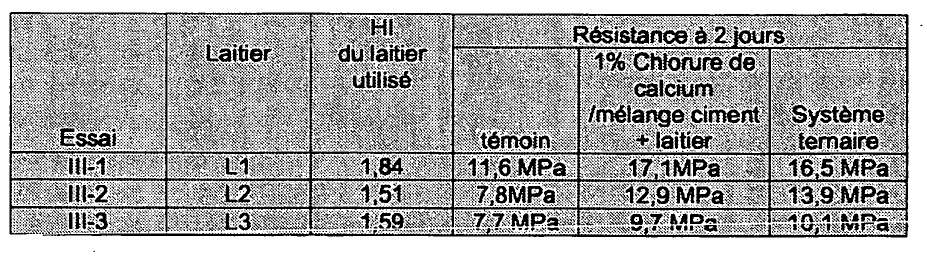

Les résultats obtenus mettent en évidence la polyvalence du système ternaire d'accélération qui donne, avec différents laitiers, des performances mécaniques équivalentes, voire meilleures à celles obtenues avec le chlorure de calcium.

### Exemple IV

Les essais de l'exemple IV sont réalisés à 20°C sur des mortiers dont le comportement est équivalent à celui d'un béton prêt à l'emploi fait en centrale.

Le ciment C utilisé pour ces essais est composé en mélangeant :
- 65,4 % en poids de clinker Portland contenant 67% d'alite (C3S), 13% de bélite (C2S), 5,3% d'aluminate (C3A) et 7% de ferrites (C4AF).

Il contient :
- 2,7 % de gypse et 1,4% de semi-hydrate et 0,52% de sulfate alcalin soluble.
- 34,6 % en poids de laitier de haut fourneau, ayant un indice d'hydraulicité HI de 1,84.

Les mortiers ont la composition suivante, en kg/m³:
- 572 kg/m³ de ciment C
- 11458 kg/m3 de granulat 0/4mm siliceux Palvadeau.
- 309 kg/m³ d'eau.

Les éprouvettes ont été mises en place dans des moules 4x4x16cm à la table vibrante.

Le système ternaire d'accélération a été utilisé ici sans ajout supplémentaire de sulfate de calcium car le sulfate de calcium présent dans le clinker Portland est suffisant.

| Exemple N° | Température | Hydroxyde de lithium | Sulfate de potassium | Résistance à 2 jours |
|---|---|---|---|---|
| témoin | 20°C | - | - | 11,8MPa |
| IV-1 | 20°C | 0,37% | 1,60% | 16,1MPa |
| IV-2 | 20°C | 0,37% | 1,05% | 15,2MPa |

La teneur en hydroxyde de lithium équivaut à une concentration molaire de 0,403N dans l'eau de gâchage.

Ces exemples montrent les gains de résistances (compression) à 2 jours à 2 stades d'optimisation du mélange accélérateur.

### Exemple V

Les essais de l'exemple V sont réalisés à 20°C avec le mortier de l'exemple IV.

Ces essais ont pour but de comparer les performances obtenues avec le système ternaire d'accélération et les accélérateurs classiques couramment utilisés.

Le ciment au laitier est le ciment C de l'exemple IV ;

La composition du système ternaire d'accélération utilisée est identique à celle de l'essai IV-1 de l'exemple IV.

Il n'y a pas d'ajout supplémentaire de sulfate de calcium car le sulfate de calcium présent dans le clinker Portland est suffisant.

Les différents accélérateurs du commerce, à savoir le chlorure de calcium, le thiocyanate de calcium, le nitrate de calcium, sont tous dosés à 0 ,8% en poids par rapport au ciment C.

| Accélérateurs | dosage | Hydroxyde de lithium | Sulfate de potassium | Résistance à 2 jours |
|---|---|---|---|---|
| témoin | | - | - | 11,8 MPa |
| Chlorure de calcium | 0,8% | - | - | 12,1 MPa |
| Chlorure de sodium | 0,8% | - | - | 11,2 MPa |
| Bromure de calcium | 0,8% | - | - | 12,2 MPa |
| Thiocyanate de calcium | 0,8% | - | - | 10,3 MPa |
| Nitrate de calcium | 0,8% | - | - | 10,3 MPa |
| Système ternaire | | 0,37% | 1,60% | 16,1 MPa |

La teneur en hydroxyde de lithium équivaut à une concentration molaire de 0,403N dans l'eau de gâchage

Ces accélérateurs n'améliorent pas significativement les résistances par rapport au témoin qui est de 11,8 MPa contrairement au système ternaire.

### Exemple VI

Les essais de l'exemple VI ont été réalisés à 20°C, avec le mortier des exemples IV et V, mais le clinker Portland entrant dans la composition du ciment au laitier est le clinker Portland de l'exemple I.

Dans cette série, l'efficacité du système ternaire d'accélération est du même ordre de grandeur que celle du chlorure de calcium et légèrement supérieure à celle des autres sels de calcium. Par rapport à l'exemple V, la différence de sensibilité aux accélérateurs est attribuée à la différence de composition du clinker Portland utilisé, en particulier la teneur en C3A, la teneur en chaux libre et les différentes formes de sulfates.

| Accélérateurs | dosage | Hydroxyde de lithium | Sulfate de potassium | Résistance à 2 jours |
|---|---|---|---|---|
| Témoin | | - | - | 9,7 MPa |
| Chlorure de calcium | 0,8% | - | - | 14,6 MPa |
| Bromure de calcium | 0,8% | - | - | 13,8 MPa |
| Thiocyanate de calcium | 0,8% | - | - | 11,6 MPa |
| Nitrate de calcium | 0,8% | - | - | 10,3 MPa |
| Système ternaire | | 0,37% | 1,60% | 13,2 MPa |

La teneur en hydroxyde de lithium équivaut à une concentration molaire de 0,403N dans l'eau de gâchage

### Exemple VII

Les essais de l'exemple VII ont été réalisés à 10°C avec la composition de mortier et le ciment au laitier de l'exemple V.

| Essai N° | Température | Hydroxyde de lithium | Sulfate de potassium | Chlorure de calcium | Résistance à 2 jours |
|---|---|---|---|---|---|
| VII-1 | 10°C | 0,37% | 1,1% | | 6,1 MPa |
| VII-2 | 10°C | 0,37% | 0,50% | | 5,3MPa |
| VII-3 | 10°C | 0,37% | 1,60% | | 4,8MPa |
| témoin | 10°C | - | - | 0,8% | 3,6MPa |

La teneur en hydroxyde de lithium équivaut à une concentration molaire de 0,403N dans l'eau de gâchage.

Le système ternaire d'accélération apporte, comme à 20°C, des gains significatifs de résistance (compression) à 2 jours. Dans les mêmes conditions, le témoin à base de chlorure de calcium à 0,8%, donne 3,6 MPa.

### Exemple VIII

Les essais de l'exemple VIII ont été réalisés en mortier normalisé à 20°C, selon EN 196 - 1, avec un mélange correspondant à :
- 70% poids d'un laitier de réactivité moyenne, ayant un indice d'hydraulicité HI de 1,84.
- 30 % poids d'un clinker Portland contenant 70% d'alite (C3S), 12,4% de bélite (C2S), 9,8% d'aluminate (C3A) et 1,1% de ferrites (C4AF). Il contient 1,4 % de gypse et 1,2% de semi-hydrate et 0,6% de sulfate alcalin.

Il illustre la possibilité d'utiliser différents hydroxydes tels que l'hydroxyde de lithium, l'hydroxyde de potassium ou de l'hydroxyde de sodium et toutes les sources d'hydroxyde obtenues à partir d'un mélange.

| Essai N° | Hydroxyde alcalin | Sulfate de potassium | anhydrite | Résistance à 2 jours |
|---|---|---|---|---|
| témoin | - | - | - | 6,1 MPa |
| VIII-1 | NaOH 0,62% | 2,0% | 2,55% | 14,1 MPa |
| VIII-2 | LiOH 0,37% | 1,62% | 2,80% | 14,2MPa |

La teneur en hydroxyde de lithium équivaut à une concentration molaire de 0,310 N dans l'eau de gâchage.

### Exemple IX

Les essais de l'exemple IX ont été réalisés sur des mortiers dont le comportement est équivalent à celui d'un béton prêt à l'emploi fait en centrale à 20°C.

Les mortiers ont la composition suivante, en kg/m³:
- 604 kg/m³ de ciment D
- 1438 kg/m³ de granulat 0/5mm Brighton Pit
- 4,83 kg/m³ d'adjuvant
- 276 kg/m³ d'eau.

Le dosage en eau est défini par le ratio eau/ciment au laitier = 0,51.

Le ciment D utilisé pour ces essais est composé en mélangeant :
- 20% poids d'un laitier de réactivité moyenne, ayant un indice d'hydraulicité HI de 1,70.
- 80% poids d'un clinker Portland contenant 53% d'alite (C3S), 20% de bélite (C2S), 6% d'aluminate (C3A) et 9% de ferrites (C4AF°. II contient 1,8% de gypse et 0,2% de semi-hydrate et 1,35% de sulfate alcalin.

Le système ternaire d'accélération a été utilisé ici sans ajout supplémentaire de sulfate de calcium car le sulfate de calcium présent dans le clinker Portland est suffisant.

Dans tous les essais, les dosages sont donnés en % poids par rapport au ciment au laitier. La teneur en hydroxyde de sodium équivaut à une concentration molaire de 0,273N dans l'eau de gâchage.

| Essai N° | Hydroxyde de sodium | Sulfate de sodium | Résistance à 1 jour |
|---|---|---|---|
| Mortier témoin | - | - | 15,9 MPa |
| IX | 0,50% | 0,30% | 17,5 MPa |

Le système ternaire d'accélération apporte un gain significatif de résistance (compression) à 1 jour par rapport au témoin.

### Exemple X

Les essais de l'exemple X ont été réalisés sur des mortiers (essai X-1 à X-3) dont le comportement est équivalent à celui d'un béton prêt à l'emploi fait en centrale à 20°C et à 10°C et sur un béton (essai X-4) courant à 20°C.

Le ciment E utilisé pour ces essais est composé en mélangeant :
- 35% poids du laitier de l'exemple IX.
- 65% poids du clinker de l'exemple IX.

Le dosage en eau est défini par le ratio eau efficace / ciment au laitier = 0,44.

Le système ternaire d'accélération a été utilisé ici sans ajout supplémentaire de sulfate de calcium car le sulfate de calcium présent dans le clinker Portland est suffisant.

Dans tous les essais, les dosages sont donnés en % poids par rapport au ciment au laitier. La teneur en hydroxyde de sodium équivaut à une concentration molaire de 0,273 N dans l'eau de gâchage.

Les mortiers ont une composition identique à celle utilisée dans l'exemple X.

| Essai N° | Température | Hydroxyde de sodium | Sulfate de sodium | Chlorure de sodium | Résistance à 1 jour |
|---|---|---|---|---|---|
| Mortier témoin | 20°C | - | - | - | 10,5MPa |
| X-1 | 20°C | 0,50% | 0,30% | - | 12,8 MPa |
| X-2 comparatif | 20°C | | | 1% | 13,9 MPa |
| Mortier témoin | 10°C | - | - | - | 2,4 MPa |
| X-3 | 10°C | 0,50% | 0,37% | - | 4,0 MPa |

Le système ternaire d'accélération apporte un gain significatif de résistance (compression) à 1 jour par rapport au témoin à 20 et à 10°C. Ce gain est un peu inférieur dans ce cas à celui obtenu avec un ajout de chlorure de sodium 1%.

Le béton a la composition suivante, en kg/m³:
- 350 kg/m³ de ciment D
- 800 Kg/m³ de granulat 0-5mm Brighton Pit
- 605 Kg/m³ de granulat 4-20 Point Anne
- 495 Kg/m³ de granulat 12-20mm Point Anne
- 2,83 Kg/m³ d'adjuvant
- 167 Kg/m³ d'eau

| Essai N° | Température | Hydroxyde de sodium | Sulfate de sodium | Résistance à 1 jour |
|---|---|---|---|---|
| Béton témoin | 20°C | - | - | 11,1 MPa |
| X-4 | 20°C | 0,50% | 0,30% | 13,5 MPa |

Le gain de résistance à 1 jour observé sur mortier est confirmé sur une formule de béton courant à 20°C.

## Revendications

1. Liant hydraulique à base de ciment au laitier, le ciment au laitier comprenant 20 à 80 % en poids par rapport à un poids total de ciment au laitier, d'un laitier de haut fourneau ou d'un mélange de laitiers de haut fourneau, et **caractérisé en ce qu'**il comprend au moins un additif d'accélération qui est un système ternaire constitué :
- d'au moins un hydroxyde de métal alcalin en une quantité telle que, lors du gâchage dans l'eau du liant hydraulique, la concentration molaire en hydroxyde de métal alcalin dans l'eau est de 0,05N à 0,60N, de préférence de 0,20N à 0,40N ;
- d'au moins un sulfate de métal alcalin présent à raison de 0,2 à 3% en poids du ciment au laitier ; et
- d'au moins une source de sulfate de calcium en proportion telle que la teneur en sulfate de calcium (CaSO₄), par rapport au poids de ciment au laitier, est de 2 à 7 %.

2. Liant hydraulique selon la revendication 1, **caractérisé en ce que** le laitier de haut fourneau comprend une phase vitreuse représentant plus de 80% en poids du laitier de haut fourneau.

3. Liant hydraulique selon la revendication 2, **caractérisé en ce que** le laitier de haut fourneau comprend, exprimé en poids par rapport au poids total du laitier de haut fourneau 28 à 40 % SiO₂, 31 à 47 % CaO, 9 à 17 % Al₂O₃, 0 à 16% MgO, et 0 à 12 % TiO₂.

4. Liant hydraulique selon la revendication 3, **caractérisé en ce que** l'indice d'hydraulicité HI (CaO + MgO + Al₂O₃)/ (SiO₂) dans le laitier de haut fourneau est de 1,22 à 2.

5. Liant hydraulique selon l'une quelconque des revendications 1 à 4, **caractérisé en ce que** l'hydroxyde de métal alcalin est choisi parmi l'hydroxyde de lithium, l'hydroxyde de sodium, l'hydroxyde de potassium et leurs mélanges.

6. Liant hydraulique selon l'une quelconque des revendications 1 à 5, **caractérisé en ce que** le sulfate de métal alcalin de l'additif d'accélération est choisi parmi le sulfate de lithium, le sulfate de sodium, le sulfate de potassium ou un mélange de deux ou plus de ces sulfates de métal alcalin.

7. Liant hydraulique selon l'une quelconque des revendications 1 à 6, **caractérisé en ce que** la source de sulfate de calcium est choisie parmi le sulfate de calcium, le gypse, les semi-hydrates, l'anhydrite et leurs mélanges, de préférence l'anhydrite ou des mélanges de gypse, de semi-hydrates et d'anhydrite.

8. Liant hydraulique selon l'une quelconque des revendications 1 à 7, **caractérisé en ce que** le ciment au laitier satisfait à la définition d'un ciment des classes CEM III/A ou CEM III/B selon la norme EN 197-1

9. Liant hydraulique selon l'une quelconque des revendications 1 à 8, **caractérisé en ce qu'**il présente une résistance mécanique à la compression à 2 jours d'au moins 8 MPa et de préférence répondant aux classes 32,5R, 42,5N, ou 42,5R selon la norme EN 197-1.

10. Mortier ou béton comprenant des granulats et un liant hydraulique selon l'une quelconque des revendications 1 à 8.

11. Mortier selon la revendication 10, **caractérisé en ce qu'**il présente une résistance mécanique à 2 jours répondant aux classes 32,5 R, 42,5N, ou 42,5R de la norme EN 197-1.

12. Procédé pour réaliser un liant hydraulique à base de ciment au laitier comprenant 20 à 80 % en poids par rapport au poids total de ciment au laitier d'un laitier ou d'un mélange de laitiers de haut fourneau, le complément étant du clinker, et ayant une résistance mécanique à la compression à 2 jours d'au moins 8 MPa qui consiste à ajouter au ciment au laitier ou former au sein du ciment au laitier au moins un additif d'accélération qui est un système ternaire constitué :
- d'au moins un hydroxyde de métal alcalin en une quantité telle que, lors du gâchage dans l'eau du liant hydraulique, la concentration molaire en hydroxyde de métal alcalin dans l'eau est de 0,05 N à 0,60N, de préférence de 0,20N à 0,40N ;
- d'au moins un sulfate de métal alcalin présent à raison de 0,2 à 3% en poids du ciment au laitier ; et
- d'au moins une source de sulfate de calcium en proportion telle que la teneur en sulfate de calcium (CaSO₄), par rapport au poids de ciment au laitier, est de 2 à 7 %.

13. Procédé selon la revendication 12, **caractérisé en ce que** le laitier de haut fourneau comprend une phase vitreuse représentant plus de 80 % en poids du laitier de haut fourneau.

14. Procédé selon la revendication 13, **caractérisé en ce que** le laitier de haut fourneau comprend, exprimé en poids par rapport au poids total du laitier de haut fourneau 28 à 40 % SiO₂, 31 à 47 % CaO, 9 à 17 % Al₂O₃, MgO 0 à 16 %, et 0 à 12 % TiO₂.

15. Procédé selon l'une quelconque des revendications 12 à 14, **caractérisé en ce que** l'indice d'hydraulicité HI = (CaO + MgO + Al₂O₃)/ (SiO₂) du laitier de haut fourneau est de 1,22 à 2.

16. Procédé selon l'une quelconque des revendications 12 à 15, **caractérisé en ce que** l'hydroxyde de métal alcalin est choisi parmi l'hydroxyde de lithium, l'hydroxyde de sodium, l'hydroxyde de potassium et leurs mélanges.

17. Procédé selon l'une quelconque des revendications 12 à 16, **caractérisé en ce que** le sulfate de métal alcalin de l'additif d'accélération est choisi parmi le sulfate de lithium, le sulfate de sodium, le sulfate de potassium ou un mélange de deux ou plus de ces sulfates de métal alcalin.

18. Procédé selon l'une quelconque des revendications 12 à 17, **caractérisé en ce que** la source de sulfate de calcium est choisie parmi le sulfate de calcium, le gypse, les semi-hydrates, l'anhydrite et leurs mélanges, de préférence l'anhydrite ou des mélanges de gypse, de semi-hydrates et d'anhydrite.

19. Procédé selon l'une quelconque des revendications 12 à 18, **caractérisé en ce que** le ciment au laitier satisfait à la définition des classes CEM III/A ou CEM III/B selon la norme EN 197-1.

## Claims

1. A hydraulic binder based on slag cement, the slag cement comprising 20 to 80 weight % relative to a total weight of slag cement, of a blast furnace slag or a mixture of blast furnace slags, and **characterized in that** it comprises at least one acceleration additive that is a ternary system comprising:
- at least one alkali metal hydroxide in amounts such that, during the mixing with water of the hydraulic binder, the molar concentration of alkali metal hydroxide in the water is from 0.05N to 0.60N, preferably from 0.20N to 0.40N;
- at least one alkali metal hydroxide at a rate of from 0.2 to 3 weight % of the slag cement; and
- at least one source of calcium sulfate in such a proportion that the content of calcium sulfate (CaSO₄), relative to the weight of the slag cement, is from 2 to 7 %.

2. The hydraulic binder according to claim 1, **characterized in that** the blast furnace slag comprises a vitreous phase representing more than 80 weight % of the blast furnace slag.

3. The hydraulic binder according to claim 2, **characterized in that** the blast furnace slag comprises, given in relative weight to the total weight of the blast furnace slag from 28 to 40 % SiO₂, from 31 to 47 % CaO, from 9 to 17 % Al₂O₃, from 0 to 16% MgO, and from 0 to 12 % TiO₂.

4. The hydraulic binder according to claim 3, **characterized in that** the Hydraulic Index HI (CaO + MgO + Al₂O₃)/ (SiO₂) in the blast furnace slag is from 1.22 to 2.

5. The hydraulic binder according to any one of claims 1 to 4, **characterized in that** the alkali metal hydroxide is selected from among lithium hydroxide, sodium hydroxide, potassium hydroxide and mixtures thereof.

6. The hydraulic binder according to any one of claims 1 to 5, **characterized in that** the alkali metal sulfate of the acceleration additive is selected from among lithium hydroxide, sodium hydroxide, potassium hydroxide or a mixture of two or more of these alkali metal sulfates.

7. The hydraulic binder according to any one of claims 1 to 6, **characterized in that** the source of calcium sulfate is selected from among calcium sulfate, gypsum, hemi-hydrates, anhydrite and mixtures thereof, preferably anhydrite or mixtures of gypsum, hemi-hydrates and anhydrite.

8. The hydraulic binder according to any one of claims 1 to 7, **characterized in that** the slag cement meets the definition of a cement in the CEM III/A or CEM III/B classes according to the EN 197-1 standard

9. The hydraulic binder according to any one of claims 1 to 8, **characterized in that** it presents a mechanical strength to compression after 2 days of at least 8 MPa and preferably meeting the 32.5R, 42.5N, or 42.5R classes according to the EN 197-1 standard.

10. A mortar or concrete comprising aggregates and a hydraulic binder according to any one of claims 1 to 8.

11. The mortar according to claim 10, **characterized in that** it presents a mechanical strength after 2 days meeting the 32.5 R, 42.5N, or 42.5R classes in the EN 197-1 standard.

12. A process to make a hydraulic binder based on slag cement comprising 20 to 80 weight % relative to the total weight of slag cement of a slag or a mixture of blast furnace slags, the complement being clinker, and having a mechanical compressive strength after 2 days of at least 8 MPa which comprises adding to the slag cement or forming within the slag cement at least one acceleration additive that is a ternary system comprising:
- at least one alkali metal hydroxide in amounts such that, during the mixing in the water of the hydraulic binder, the molar concentration of alkali metal hydroxide in the water is from 0.05 N to 0.60N, preferably from 0.20N to 0.40N;
- at least one alkali metal sulfate at a rate of from 0.2 to 3 weight % of the slag cement; and
- at least one source of calcium sulfate in proportions such that the level of calcium sulfate (CaSO₄), relative to the weight of the slag cement is from 2 to 7 %.

13. The process according to claim 12, **characterized in that** the blast furnace slag comprises a vitreous phase representing more than 80 weight % of the blast furnace slag.

14. The process according to claim 13, **characterized in that** the blast furnace slag comprises, given in relative weight to the total weight of the blast furnace slag from 28 to 40 % SiO₂, from 31 to 47 % CaO, from 9 to 17 % Al₂O₃, from 0 to 16% MgO, and from 0 to 12 % TiO₂.

15. The process according to any one of claims 12 to 14, **characterized in that** the hydraulic index HI = (CaO + MgO + Al₂O₃)/ (SiO₂) of the blast furnace slag is from 1.22 to 2.

16. The process according to any one of claims 12 to 15, **characterized in that** the alkali metal hydroxide is selected from among lithium hydroxide, sodium hydroxide, potassium hydroxide and mixtures thereof.

17. The process according to any one of claims 12 to 16, **characterized in that** the alkali metal sulfate of the acceleration additive is selected from among lithium sulfate, sodium sulfate, potassium sulfate or a mixture of two or more of these alkali metal sulfates.

18. The process according to any one of claims 12 to 17, **characterized in that** the source of calcium sulfate is selected from among calcium sulfate, gypsum, hemi-hydrates, anhydrite and mixtures thereof, preferably anhydrite or mixtures of gypsum, hemi-hydrates and anhydrite.

19. The process according to any one of claims 12 to 18, **characterized in that** the slag cement meets the definition of the CEM III/A or CEM III/B classes according to the EN 197-1 standard.

## Patentansprüche

1. Hydraulisches Bindemittel auf der Basis von Schlackenzement, wobei der Schlackenzement, bezogen auf das Schlackenzementgesamtgewicht, 20 bis 80 Gew.-% einer Hochofenschlacke oder einer Mischung von Hochofenschlacken umfasst, **dadurch gekennzeichnet, dass** es mindestens ein Beschleunigungsadditiv umfasst, das ein ternäres System ist, aufgebaut aus:
- mindestens einem Alkalimetallhydroxid in einer solchen Menge, dass beim Anrühren des hydraulischen Bindemittels in Wasser die Molkonzentration an Alkalimetallhydroxid im Wasser 0,05N bis 0,60N, vorzugsweise 0,20N bis 0,40N beträgt;
- mindestens einem Alkalimetallsulfat, das in einem Anteil von 0,2 bis 3 % vom Gewicht des Schlackenzements vorliegt; und
- mindestens einer Calciumsulfatquelle in einem solchen Anteil, dass der Gehalt an Calciumsulfat (CaSO₄), bezogen auf das Gewicht des Schlackenzements, 2 bis 7 % beträgt.

2. Hydraulisches Bindemittel nach Anspruch 1, **dadurch gekennzeichnet, dass** die Hochofenschlacke eine Glasphase umfasst, die mehr als 80 Gew.-% der Hochofenschlacke darstellt.

3. Hydraulisches Bindemittel nach Anspruch 2, **dadurch gekennzeichnet, dass** die Hochofenschlacke, ausgedrückt in Gewicht bezüglich des Gesamtgewichts der Hochofenschlacke, 28 bis 40 % SiO₂, 31 bis 47 % CaO, 9 bis 17 % Al₂O₃, 0 bis 16 % MgO und 0 bis 12 % TiO₂ umfasst.

4. Hydraulisches Bindemittel nach Anspruch 3, **dadurch gekennzeichnet, dass** der Hydraulizitätsindex HI (CaO+MgO+Al₂O₃)/(SiO₂) in der Hochofenschlacke 1,22 bis 2 beträgt.

5. Hydraulisches Bindemittel nach einem der Ansprüche 1 bis 4, **dadurch gekennzeichnet, dass** das Alkalimetallhydroxid aus Lithiumhydroxid, Natriumhydroxid, Kaliumhydroxid und deren Mischungen ausgewählt ist.

6. Hydraulisches Bindemittel nach einem der Ansprüche 1 bis 5, **dadurch gekennzeichnet, dass** das Alkalimetallsulfat des Beschleunigungsadditivs aus Lithiumsulfat, Natriumsulfat, Kaliumsulfat oder einer Mischung von zwei oder mehr dieser Alkalimetallsulfaten ausgewählt ist.

7. Hydraulisches Bindemittel nach einem der Ansprüche 1 bis 6, **dadurch gekennzeichnet, dass** die Calciumsulfatquelle aus Calciumsulfat, Gips, Halbhydraten, Anhydrid und deren Mischungen, vorzugsweise Anhydrid oder Mischungen von Gips, Halbhydraten und Anhydrid, ausgewählt ist.

8. Hydraulisches Bindemittel nach einem der Ansprüche 1 bis 7, **dadurch gekennzeichnet, dass** der Schlackenzement die Definition eines Zements der Klassen CEM III/A oder CEM III/B nach der Norm EN 197-1 erfüllt.

9. Hydraulisches Bindemittel nach einem der Ansprüche 1 bis 8, **dadurch gekennzeichnet, dass** es eine mechanische Druckfestigkeit nach 2 Tagen von mindestens 8 MPa aufweist, und vorzugsweise den Klassen 32,5R, 42,5N oder 42,5R nach der Norm EN 197-1 entspricht.

10. Mörtel oder Beton, umfassend Granulate und ein hydraulisches Bindemittel nach einem der Ansprüche 1 bis 8.

11. Mörtel nach Anspruch 10, **dadurch gekennzeichnet, dass** er eine mechanische Festigkeit nach 2 Tagen aufweist, die den Klassen 32,5 R, 42,5N oder 42,5R der Norm EN 197-1 entspricht.

12. Verfahren zur Herstellung eines hydraulischen Bindemittels auf der Basis von Schlackenzement, das, bezogen auf das Schlackenzementgesamtgewicht, 20 bis 80 Gew.-% einer Hochofenschlacke oder einer Mischung von Hochofenschlacken umfasst, wobei die Ergänzung Klinker ist, und eine mechanische Druckfestigkeit nach 2 Tagen von mindestens 8 MPa aufweist, das darin besteht, dass dem Schlackenzement ein Beschleunigungsadditiv zugesetzt oder dieses im Schlackenzement gebildet wird, wobei dieses Beschleunigungsadditiv ein ternäres System ist, aufgebaut aus:
- mindestens einem Alkalimetallhydroxid in einer solchen Menge, dass beim Anrühren des hydraulischen Bindemittels in Wasser die Molkonzentration an Alkalimetallhydroxid im Wasser 0,05N bis 0,60N, vorzugsweise 0,20N bis 0,40N beträgt;
- mindestens einem Alkalimetallsulfat, das in einem Anteil von 0,2 bis 3 % vom Gewicht der Schlacke vorliegt; und
- mindestens einer Calciumsulfatquelle in einem solchen Anteil, dass der Gehalt an Calciumsulfat (CaSO₄), bezogen auf das Gewicht des Schlackenzements, 2 bis 7 % beträgt.

13. Verfahren nach Anspruch 12, **dadurch gekennzeichnet, dass** die Hochofenschlacke eine Glasphase umfasst, die mehr als 80 Gew.-% der Hochofenschlacke darstellt.

14. Verfahren nach Anspruch 13, **dadurch gekennzeichnet, dass** die Hochofenschlacke, ausgedrückt in Gewicht bezüglich des Gesamtgewichts der Hochofenschlacke, 28 bis 40 % SiO₂, 31 bis 47 % CaO, 9 bis 17 % Al₂O₃, MgO 0 zu 16 % und 0 bis 12 % TiO₂ umfasst.

15. Verfahren nach einem der Ansprüche 12 bis 14, **dadurch gekennzeichnet, dass** der Hydraulizitätsindex HI (CaO+MgO+Al₂O₃)/(SiO₂) der Hochofenschlacke 1,22 bis 2 beträgt.

16. Verfahren nach einem der Ansprüche 12 bis 15, **dadurch gekennzeichnet, dass** das Alkalimetallhydroxid aus Lithiumhydroxid, Natriumhydroxid, Kaliumhydroxid und deren Mischungen ausgewählt ist.

17. Verfahren nach einem der Ansprüche 12 bis 16, **dadurch gekennzeichnet, dass** das Alkalimetallsulfat des Beschleunigungsadditivs aus Lithiumsulfat, Natriumsulfat, Kaliumsulfat oder einer Mischung von zwei oder mehr dieser Alkalimetallsulfaten ausgewählt ist.

18. Verfahren nach einem der Ansprüche 12 bis 17, **dadurch gekennzeichnet, dass** die Calciumsulfatquelle aus Calciumsulfat, Gips, Halbhydraten, Anhydrid und deren Mischungen, vorzugsweise Anhydrid oder Mischungen von Gips, Halbhydraten und Anhydrid, ausgewählt ist.

19. Verfahren nach einem der Ansprüche 12 bis 18, **dadurch gekennzeichnet, dass** der Schlackenzement die Definition der Klassen CEM III/A oder CEM III/B nach der Norm EN 197-1 erfüllt.
